# EUROPÄISCHE PATENTSCHRIFT

(11) **EP 1 396 652 B1**
(45) Veröffentlichungstag und Bekanntmachung des Hinweises auf die Patenterteilung: **03.05.2006**
(21) Anmeldenummer: 03019856.8
(22) Anmeldetag: 01.09.2003
(51) Int. Cl.: F16D 65/02

(54) **Scheibenbremse**
Disc brake
Frein à disque

(30) Priorität: 05.09.2002 DE 10241157
(43) Veröffentlichungstag der Anmeldung: 10.03.2004
(73) Patentinhaber: Wabco Radbremsen GmbH, 68229 Mannheim (DE)
(72) Erfinder: Kloos, Eugen, 64625 Bensheim (DE); Beyer, Frank, 68239 Mannheim (DE)
(74) Vertreter: Leinweber & Zimmermann

(56) Entgegenhaltungen:
- US-A- 3 166 157
- US-A- 3 422 935
- US-A- 4 533 025
- US-A- 4 632 227

## Beschreibung

Die Erfindung betrifft eine Scheibenbremse nach dem Oberbegriff des Anspruchs 1.

Eine solche Scheibenbremse ist bekannt, beispielsweise aus der US-A-3,422,935.

Generell werden Scheibenbremsen nach deren Aufbau und Wirkungsweise hinsichtlich der Anordnung der Zuspannvorrichtung im Bremssattel unterschieden. Beispiele zeigen die Figuren 1 bis 4. Im einzelnen zeigen
- Figur 1: eine schematische Schnittansicht einer Gleitsattelscheibenbremse mit einseitiger Zuspannung nach dem Reaktionskraftprinzip,
- Figur 2: eine schematische Schnittansicht einer Festsattelscheibenbremse mit einseitiger Zuspannung nach dem Reaktionskraftprinzip mit schwimmender Bremsscheibe,
- Figur 3: eine schematische Schnittansicht einer Festsattelscheibenbremse mit beidseitiger Zuspannvorrichtung und fester Bremsscheibe und
- Figur 4: eine schematische Draufsicht im Teilschnitt auf eine Scheibenbremse.

Wenn nachfolgend die Problematik anhand einer Gleitsattelscheibenbremse beschrieben wird, so gelten alle Ausführungen - im übertragenen Sinne - auch für Sattelscheibenbremsen der Bauart wie Pendelsattel oder Festsattel mit einseitiger oder beidseitiger Zuspannung, wenn am freien - also nicht abgestützten - Sattelschenkel eine Bremsbakke direkt gehalten, geführt und/oder abgestützt ist, also der freie Schenkel, der die Bremsumfangskräfte auf dieser Seite aufnimmt und über das die Bremsscheibe übergreifende Brückenteil auf die andere Sattelseite überträgt, auf der der dortige Schenkel des Bremssattels mit einem Festteil verbunden ist. Das heißt, die Erfindung beschränkt sich nicht nur auf Gleitsattelscheibenbremsen.

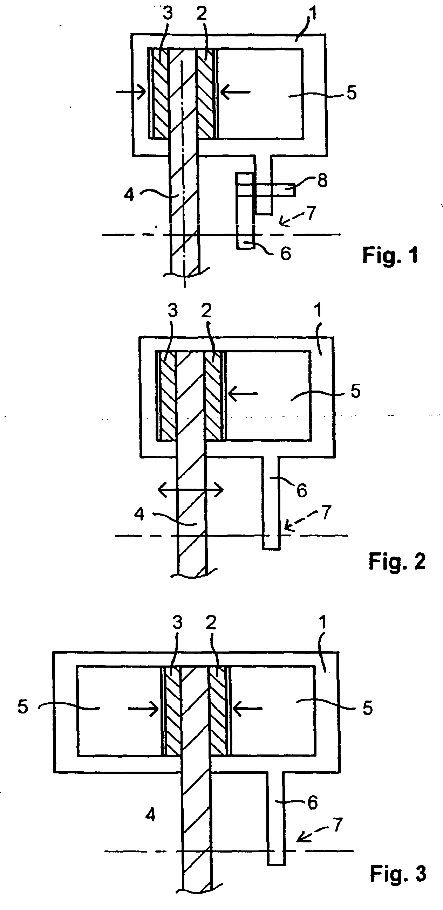

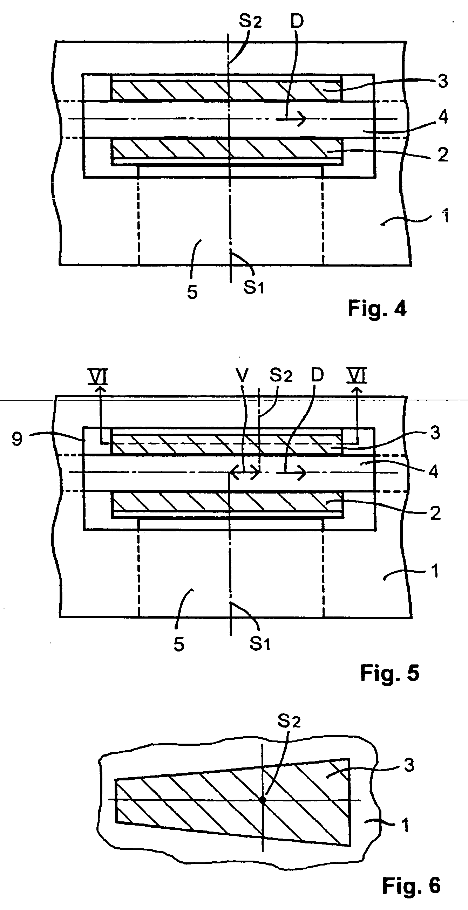

Nach dem in den Figuren 1 bis 4 schematisch dargestellten Stand der Technik weist die Scheibenbremse einen Bremssattel 1 auf, der mit seinen beiden Sattelschenkeln eine Bremsscheibe 4 umgreift und der mit mindestens einer auf einer Seite der Bremsscheibe angeordneten Zuspannvorrichtung 5 ausgestattet ist, um beiderseits der Bremsscheibe in den Bremssattelschenkeln abgestützte und geführte Bremsbacken 2, 3 gegen die Bremsscheibe 4 zu drücken. Die Bremsbacken 2, 3 sind so gehalten/geführt, daß sie einander gegenüberliegen und ihre Schwereachsen bzw. Schwerpunkte S 1, S 2 (Figur 4) bei einer Verschiebung in Richtung der Bremsscheibe aufeinanderliegen und senkrecht auf die Bremsscheibenebene treffen.

Dabei ist der Bremssattel 1 auf einer Seite der Bremsscheibe 4 mittels eines Festteils 6 mit einem Fahrzeugteil 7 (nicht gezeigt) verbunden, welches als Achsteil bezeichnet wird. Über das Festteil 6 werden die vom Bremssattel 1 bei einer Bremsbetätigung aufgenommenen Bremsmomente in das Fahrzeugteil 7 (Achsteil) abgeführt. Insbesondere dann, wenn für die sogenannte felgenseitige Bremsbacke 3 kein separates und die Bremsumfangskräfte aufnehmendes Führungs- und Abstützteil wie ein Bremsenträger vorhanden ist, sondern diese Bremsbacke direkt am freien, nicht abgestützten Bremssattelschenkel befestigt ist, neigt der Bremssattel 1 bei einer Bremsbetätigung verstärkt dazu, sich entsprechend der Drehrichtung D der Bremsscheibe 4 in Richtung Bremsscheibenauslaufseite schräg zu stellen.

Als Folge treten neben einem nachteiligen Schrägverschleiß der felgenseitigen Bremsbacke 3 durch ungleichmäßige Belaganpressung auch je nach Sattelbauart der Scheibenbremse extreme Belastungen in den Führungs- bzw. Tragteilen auf. Dies sind bei einem Gleit- oder Pendelsattel die Bolzenführungen 8 bzw. Lagerbolzen, bei einem Festsattel hingegen der Befestigungsflansch. Dementsprechend stabil müssen entweder die Führungs- oder die Trageeinrichtungen für den Bremssattel gegenüber dem Fahrzeugteil ausgelegt sein.

Da insbesondere bei Scheibenbremsen für Nutzfahrzeuge sehr hohe Bremsmomente zum Abbremsen des Fahrzeugs erforderlich sind, ist eine dementsprechend aufwendige Materialdimersionierung erforderlich. Jedoch läßt sich auch damit eine nachteilige Sattelschrägstellung nicht gänzlich vermeiden.

Demzufolge wird bei der Scheibenbremse nach der DE 197 43 538 mit einer direkten Befestigung der Bremsbacke am freien Sattelschenkel (Felgenseite) versucht, einer Schrägstellung des Sattels dadurch entgegenzuwirken, daß bei einem Gleitsattel ein Teil des Bremsenträgers die Bremsscheibe mit seitlichen Führungsarmen übergreift, um als Stütze/Anlage für den Bremssattel zu dienen, wodurch einer Sattelschrägstellung entgegengewirkt werden soll. Jedoch schränkt eine enge Führungstolerierung die Gleitfunktion durch unerwünschte Reibmomente durch die Sattelanlage während des Brems- und Lösevorgangs ein. Ebenso nachteilig wirken sich hohe Biege- und Reibmomente auf/in den Führungslagern des Gleitsattels aus.

Eine weitere Möglichkeit der Problemlösung zeigt die EP-PS 709 592, die ebenfalls die Führung der zuspannseitigen Bremsbacke im Festteil der Bremse und die felgenseitige Bremsbacke am Sattelschenkel vorsieht und die eine Bremssattelführung mittels Führungsbolzen realisiert.

Bei beiden beschriebenen Lösungen nach dem Stand der Technik liegen die Schwerpunkte der Bremsbacken bezüglich der Bremsscheibe einander gegenüber. Die Bremsbacken liegen somit einander symmetrisch gegenüber.

Die Bremse nach der EP-PS 709 592 wäre zwar allein schon wegen der Verwendung eines annähernd plattenförmigen Bremsenträgers aus Gewichtsgründen auch im Nutzfahrzeugbereich wünschenswert, jedoch bringt dieser Aufbau selbst bei kleinen und im PKW-Bereich verwendeten Scheibenbremsen schon enorme Nachteile mit sich, die sich hauptsächlich in einer Schrägstellung des Bremssattels äußern. Die Folgen davon sind hohe Biegemomente inklusive Reibmomente in den Sattelführungen (Gegenmoment zur Sattelschrägstellung) und eine ungleichmäßige felgenseitige Belaganlage mit einem nachteiligen Tangentialverschleiß.

Um den steigenden Anforderungen des Marktes an einen Gleitsattel oder Festsattel - wie Gewichtseinsparung, kompakte und servicefreundliche Bauweise - gerecht zu werden, jedoch andererseits die Sicherheit der Bremsenfunktion sowie die Stabilität der Bremse nicht zu vernachlässigen, muß unter Berücksichtigung der verwendeten Werkstoffe das Bestreben dahin gehen, geeignete Wege durch eine moderne Bremsenkonstruktion zu beschreiten. Dieses Ziel setzt sich die Erfindung.

Der Erfindung liegt die Aufgabe zugrunde, die aus der US-A-3,422,935 bekannte Scheibenbremse derart weiterzubilden, daß unerwünschte Drehmomente vermieden werden, gleichzeitig aber einer Schrägstellung des Bremssattels vorgebeugt wird.

Erfindungsgemäß wird die gestellte Aufgabe mit einer Scheibenbremse nach Anspruch 1 gelöst.

Mit anderen Worten wird die Bremse in vorbestimmter Weise "unsymmetrisch" ausgelegt. Dadurch wird zu dem Drehmoment auf derjenigen Seite des Bremssattels, welche mit dem Festteil der Achse verbunden ist, ein der Strecke des Versatzes der beiden Schwerpunkte entsprechendes Gegenmoment erzeugt. Bei geeigneter Wahl der Versatzstrecke heben sich die beiden Drehmomente auf, sie "neutralisieren" einander. Mithin wird bei entsprechender Wahl der Versatzstrecke eine Sattelschrägstellung wirkungsvoll vermieden, wodurch insbesondere auf der freien Seite des Bremssattels eine gleichmäßige Belagablage erreicht wird. Daraus resultiert eine entsprechende Verschleißkompensation. Die Führungsbolzen müssen nicht mehr wie beim Stand der Technik ein mit erhöhten Reibmomenten verbundenes Gegenmoment erzeugen, sie nehmen jetzt nur noch die Verschiebekraft und das Abstützmoment des Bremssattels auf..Dadurch ist auch eine verbesserte Gleitlagerung bei einem Verschiebesattel realisiert.

Es wird ausdrücklich darauf hingewiesen, daß es gleichgültig ist, ob es sich um ein am Funktionsbeispiel beschriebenes einzelnes Reibelement auf jeder Seite der Bremsscheibe oder um mehrere Einzelbremsbacken/Einzelsegmente auf jeder Seite der Bremsscheibe handelt, weil der Effekt einer Erzeugung eines Gegenmomentes durch versetzte Anordnung/en auch mit mehreren Bremsbacken erzielt werden kann.

Selbstverständlich trifft dies auch für einen um mindestens einen Lagerbolzen verschwenkbaren Pendelsattel zu, ebenso für eine Festsattelscheibenbremse. Durch die bereits erläuterte Neutralisierung der Drehmomente erfolgt auch keine "Verschränkung" (Schrägstellung) in den Halte- bzw. Befestigungsbereichen des Bremssattels mehr, wodurch auch hier Material- und Gewichtseinsparungen durch einen geringeren Materialeinsatz erzielt werden können.

Erfindungsgemäß ist weiter bevorzugt vorgesehen, daß der Versatz des zweiten Schwerpunkts bezüglich des ersten Schwerpunkts sowohl im Ruhezustand als auch im Betätigungszustand der Bremse vorliegt.

Als mechanisch besonders vorteilhaft ist es erfindungsgemäß bevorzugt, daß die beiden Schwerpunkte den gleichen Radialabstand von der Mittelachse der Bremsscheibe haben. Mit anderen Worten ist zwischen den beiden Schwerpunkten ein Winkelabstand um den Bremsscheibenmittelpunkt definiert.

Ein Versatz des zweiten Schwerpunktes gegenüber dem ersten Schwerpunkt in Richtung parallel zur Bremsscheibe kann zumindest teilweise auf einen Versatz der ersten Bremsbacke gegenüber der zweiten Bremsbacke parallel zur Bremsscheibe zurückgehen.

Mit anderen Worten ist nach einer Ausgestaltung der Erfindung vorgesehen, daß die Bremsbacken versetzt zueinander angeordnet sind.

Zusätzlich oder alternativ kann nach der Erfindung aber auch vorgesehen sein, daß ein Versatz des zweiten Schwerpunktes gegenüber dem ersten Schwerpunkt in Richtung parallel zur Bremsscheibe zumindest teilweise auf zueinander unterschiedliche Ausgestaltungen der ersten und der zweiten Bremsbacke zurückgeht.

Bei dieser Ausführungsform der Erfindung ist mit anderen Worten vorgesehen, daß die Schwerpunkte "innerhalb" der Bremsbacken zueinander versetzt werden, so daß ein Versatz der beiden Schwerpunkte zueinander auch dann erzielt würde, wenn die beiden Bremsbacken "symmetrisch" zueinander in der Bremse angeordnet würden.

Dabei besteht eine bevorzugte Ausführungsform der Erfindung darin, daß ein Versatz des zweiten Schwerpunktes gegenüber dem ersten Schwerpunkt in Richung parallel zur Bremsscheibe zumindest teilweise auf zueinander unterschiedliche Masseverteilungen der ersten und der zweiten Bremsbacke zurückgeht.

Als eine besonders einfache Ausführungsform der Erfindung ist dabei vorgesehen, daß die erste und/oder die zweite Bremsbacke in zumindest einer Schnittebene keilförmig ist.

Insbesondere zur Materialersparnis kann erfindungsgemäß vorgesehen sein, daß der Sattel in einem die Bremsscheibe übergreifenden Bereich eine Öffnung aufweist.

Um eine bessere Plazierung der Bremsbacken zu ermöglichen, kann sich die Öffnung erfindungsgemäß bevorzugt in der Projektion parallel zur Bremsscheibe über die erste und/oder die zweite Bremsbacke erstrecken.

Dabei hat die Öffnung weiter bevorzugt die Kontur eines Parallelogramms, wodurch insbesondere bei zueinander versetzt angeordneten Bremsbacken die dem Versatz anzupassende Öffnungsbreite und damit die Gesamtbreite des Bremssattels minimiert ist. Gleichzeitig ergeben sich beidseits der Öffnung Strebenbereiche an dem Sattel, die im wesentlichen dreieckig sind, wodurch die Sattelsteifigkeit erhöht wird.

Die Bremse ist erfindungsgemäß bevorzugt mit einem plattenförmigen Tragteil versehen, wodurch der Materialaufwand auch in dieser Hinsicht minimiert ist. Dieses plattenförmige Tragteil kann deshalb verwendet werden, weil erfindungsgemäß Drehmomente neutralisiert sind.

Weiter bevorzugt ist erfindungsgemäß das Tragteil einstückig mit einem Achsteil ausgeführt.

Wie bereits oben ausgeführt, handelt es sich bei der erfindungsgemäßen Scheibenbremse bevorzugt um eine Gleitsattelscheibenbremse, eine Pendelsattelscheibenbremse oder eine Festsattelscheibenbremse mit einseitiger oder beidseitiger Zuspannung.

Schließlich ist die Bremse erfindungsgemäß bevorzugt für den Einbau in Nutzfahrzeugen ausgelegt.

Im folgenden ist die Erfindung anhand bevorzugter Ausführungsbeispiele unter Bezugnahme auf die beiliegende Zeichnung mit weiteren Einzelheiten näher erläutert. Dabei zeigen
- die Figuren 5 bis 9: schematisch verschiedene Ausführungsbeispiele der Erfindung.

In den Figuren 5 bis 9 werden - soweit vorhanden - die selben Bezugszeichen verwendet wie in den Figuren 1 bis 4.

Wie den Figuren 5 bis 9 zu entnehmen ist, fallen die Schwerpunkte S 1 und S 2 nicht wie bei dem Stand der Technik aufeinander. Der entsprechende Versatz ist nach den Figuren 5 und 6 dadurch realisiert, daß die Bremsbacke 3 eine beliebige Belagkontur aufweist, so daß deren Schwerpunkt S 2 gegenüber dem Schwerpunkt S 1 der Bremsbacke 2 um die Strecke V in Richtung Bremsscheibenaustaufseite versetzt ist.

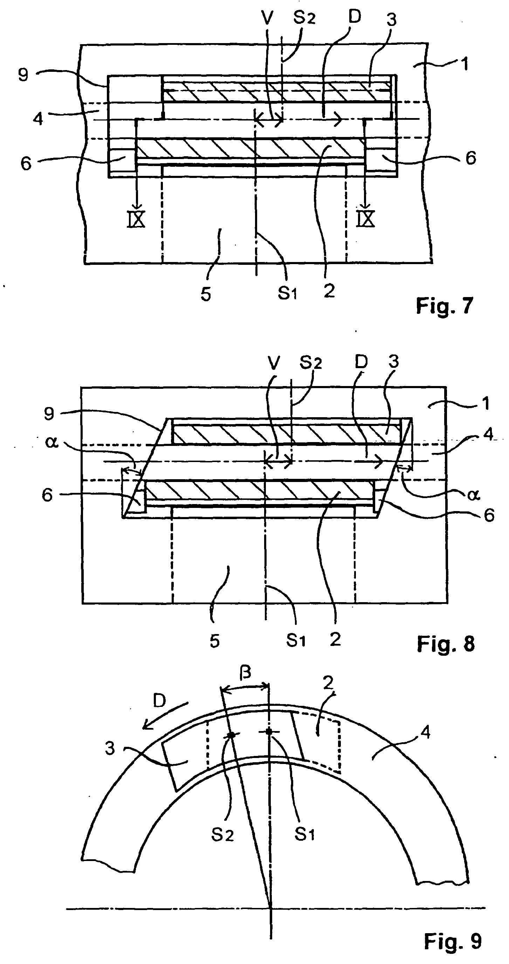

Bevorzugt wird der Versatz V in Richtung Bremsscheibenauslaufseite aber dadurch erreicht, daß die Bremsbacke 3 in Parallelrichtung verschoben und/oder um einen Winkel β (Figuren 7 und 9) verdreht gegenüber der Bremsbacke 2 im freien Sattelschenkel angeordnet ist. Die beiden Schwerpunkte S 1 und S 2 liegen mithin auf einem gedachten Kreisbogen um den Mittelpunkt der Bremsscheibe 4. Diese Ausgestaltung hat den Vorteil, daß gleiche Belagausführungen auf beiden Seiten der Bremsscheibe verwendet werden können. Dadurch werden beispielsweise falsche Einbauten verhindert.

Eine weitere Verbesserung inklusive Gewichtseinsparung der Sattelstruktur mit der erfindungsgemäßen versetzten Anordnung der Bremsbackenschwerpunkte S 1 und S 2 läßt sich dadurch erreichen, daß der Bremssattel 1 eine Radialöffnung 9 in dem den Bremsscheibenbereich übergreifenden Brückenbereich aufweist, wodurch eine bessere Plazierung der Bremsbacken 2, 3 erreicht wird (Figuren 5, 7). Im Bereich der Anlage an den Bremsbacken 2, 3 ist der Bremssattel 1 hingegen geschlossen, weshalb die Bremsbacken 2, 3 axial über die gesamte Breite abgestützt sind. Dadurch sind Kippbewegungen und Verkanten ausgeschlossen.

Dieser Vorteil mit einer Radialöffnung läßt sich nochmals verbessern, wenn in der Draufsicht auf den Bremssattel (Figur 8) die Kontur der Radialöffnung 9 unter einem Winkel α schräg in Richtung Belagversatz V verläuft und somit annähernd die Form eines Parallelogramms aufweist. Dies hat den Vorteil, daß die dem Versatz anzupassende Öffnungsbreite und somit auch die Breite des Bremssattels 1 nicht entsprechend der Versatzgröße V verbreitert werden muß. Gleichzeitig ergeben sich durch die neuen Brückenstrebenbereiche beidseitig der schräg verlaufenden Radialöffnung, die annähernd die Kontur eines Dreiecks aufweisen, wesentlich verbesserte Festigkeitseigenschaften gegenüber herkömmlichen Brückenstrebenbereichen. Dies trägt nochmals zur Verbesserung der Sattelsteifigkeit bei.

Aufgrund der beschriebenen Vorteile läßt sich die Scheibenbremse mit einem Bremssattel 1 als Gleitsattel besonders bei solchen Einbauverhältnissen einsetzen, wo gemäß Figur 1 das Trageteil 6 inklusive der/des Führungsbolzen(s) 8 plattenförmig ausgebildet ist und weiterhin vorteilhaft mit dem Achsteil 7 eine (einstückige) Einheit, beispielsweise als Schmiedeteil ausgeführt, bildet. Dadurch kann auch die Führung/Abstützung der auf dieser Seite gelagerten Bremsbacke 2 innerhalb des als Bremsenträger dienenden Festteils 6, 7 erfolgen, weil insbesondere durch die erfindungsgemäße Neutralisierung der Drehmomente wesentlich geringere Anforderungen an die Führungs- bzw. Halteeinrichtungen hinsichtlich beispielsweise der Dimensionierung und der Materialeigenschaften etc. gegenüber den aus dem Stand der Technik bekannten Lösungen gestellt werden müssen.

Für den Versatz V kann keine feststehende Größe angegeben werden. Vielmehr wird der Versatz V zur bewußten Erzeugung des erforderlichen Gegenmomentes anhand der jeweiligen Gegebenheiten rechnerisch ermittelt und ist abhängig von dem Reibbeiwert (Reibwertpaarung / Kombination zwischen dem Bremsbelag und der Bremsscheibe) und der Bremsengeometrie (Größe der Bremse / Bremsscheibe). Diese sind letztendlich abhängig vom Einsatzfall der Scheibenbremse.

Gleiches gilt auch für den Verdrehwinkel β. Auch dieser Winkel wird rechnerisch ermittelt und ist abhängig vom Durchmesser der Bremsscheibe und von der Bremsengeometrie. Auch hier ist der entsprechende Einsatzfall der Scheibenbremse zu berücksichtigen.

Die in der obigen Beschreibung, den Ansprüchen sowie der Zeichnung offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Scheibenbremse mit
einer Bremsscheibe (4) mit einer bevorzugten Laufrichtung (D),
einer ersten Bremsbacke (2) mit einem ersten Schwerpunkt (S1) auf einer ersten Seite der Bremsscheibe (4),
einer eine Mittelachse aufweisenden Zuspanneinrichtung (5), die dazu ausgelegt ist, die erste Bremsbacke (2) gegen die Bremsscheibe (4) zu drängen, wobei die Mittelachse senkrecht auf der Hauptebene der Bremsscheibe steht,
einer zweiten Bremsbacke (3) mit einem zweiten Schwerpunkt (S2) auf einer zweiten Seite der Bremsscheibe (4) und
einem Sattel (1) zum Übertragen von mit der zweiten Bremsbacke (3) erzeugten Bremskräften auf die erste Seite der Bremsscheibe (4), wobei
der zweite Schwerpunkt (S2) gegenüber dem ersten Schwerpunkt (S1) um eine vorbestimmte Strecke (V) in Richtung auf eine der bevorzugten Drehrichtung (D) der Bremsscheibe (4) entsprechende Bremsscheibenauslaufseite versetzt ist,
**dadurch gekennzeichnet, daß**
die Mittelachse der Zuspanneinrichtung (5) durch den ersten Schwerpunkt (S1) läuft.

2. Scheibenbremse nach Anspruch 1, **dadurch gekennzeichnet, daß** der Versatz des zweiten Schwerpunkts (S2) bezüglich des ersten Schwerpunkts (S1) sowohl im Ruhezustand als auch im Betätigungszustand der Bremse vorliegt.

3. Scheibenbremse nach einem der vorangehenden Ansprüche, **dadurch gekennzeichnet, daß** die beiden Schwerpunkte (S1, S2) den gleichen Radialabstand von der Mittelachse der Bremsscheibe (4) haben.

4. Scheibenbremse nach einem der vorangehenden Ansprüche, **dadurch gekennzeichnet, daß** ein Versatz (V) des zweiten Schwerpunkts (S2) gegenüber dem ersten Schwerpunkt (S1) in Richtung parallel zur Bremsscheibe (4) zumindest teilweise auf einen Versatz der ersten Bremsbacke (3) gegenüber der zweiten Bremsbacke (2) parallel zur Bremsscheibe (4) zugeht.

5. Scheibenbremse nach einem der vorangehenden Ansprüche, **dadurch gekennzeichnet, daß** ein Versatz (V) des zweiten Schwerpunkts (S2) gegenüber dem ersten Schwerpunkt (S1) in Richtung parallel zur Bremsscheibe (4) zumindest teilweise auf zueinander unterschiedliche Ausgestaltungen der ersten und der zweiten Bremsbacke (2, 3) zurückgeht.

6. Scheibenbremse nach einem der vorangehenden Ansprüche, **dadurch gekennzeichnet, daß** ein Versatz (V) des zweiten Schwerpunkts (S2) gegenüber dem ersten Schwerpunkt (S1) in Richtung parallel zur Bremsscheibe (4) zumindest teilweise auf zueinander unterschiedliche Masseverteilungen der ersten und der zweiten Bremsbacke (2, 3) zurückgeht.

7. Scheibenbremse nach einem der vorangehenden Ansprüche, **dadurch gekennzeichnet, daß** die erste und/oder die zweite Bremsbacke (2, 3) in zumindest einer Schnittebene keilförmig ist.

8. Scheibenbremse nach einem der vorangehenden Ansprüche, **dadurch gekennzeichnet, daß** der Sattel (1) in einem die Bremsscheibe (4) übergreifenden Bereich eine Öffnung (9) aufweist.

9. Scheibenbremse nach Anspruch 8, **dadurch gekennzeichnet, daß** die Öffnung (9) sich in der Projektion parallel zur Bremsscheibe über die erste und/oder die zweite Bremsbacke (2, 3) erstreckt.

10. Scheibenbremse nach Anspruch 8 oder 9, **dadurch gekennzeichnet, daß** die Öffnung (9) die Kontur eines Parallelogramms hat.

11. Scheibenbremse nach einem der vorangehenden Ansprüche, **gekennzeichnet durch** ein plattenförmiges Tragteil (6).

12. Scheibenbremse nach Anspruch 11, **dadurch gekennzeichnet, daß** das Tragteil (6) einstückig mit einem Achsteil (7) ausgeführt ist.

13. Scheibenbremse nach einem der vorangehenden Ansprüche, **dadurch gekennzeichnet, daß** sie eine Gleitsattelscheibenbremse, eine Pendelsattelscheibenbremse oder eine Festsattelscheibenbremse mit einseitiger oder beidseitiger Zuspannung ist.

14. Scheibenbremse nach einem der vorangehenden Ansprüche, **dadurch gekennzeichnet, daß** sie eine Bremse für Nutzfahrzeuge ist.

## Claims

1. Disc brake with
a brake disc (4) in a preferred running direction (D);
a first brake shoe (2) with a first point of mass (S1) on a first side of the brake disc (4);
a tensile device (5) comprising a centre axis, designed to push the first brake shoe (2) against the brake disc (4), and the centre axis stands perpendicularly on the main level of the brake disc;
a second brake shoe (3) with a second point of mass (S2) on a second side of the brake disc (4); and
a saddle (1) for transferring braking forces generated by the second brake shoe (3) onto the first side of the brake shoe (4); and
the second point of mass (S2) is offset relative to the first point of mass (S1) by a predetermined path (V) in direction of a brake disc run-out side which corresponds with the preferred rotary direction (D) of the brake disc (4),
**characterised in that**
the centre axis of the tensile device (5) runs through the first point of mass (S1).

2. Disc brake according to Claim 1, **characterised in that** the offset of the second point of mass (S2) relative to the first point of mass (S1) is present both during idling and in an operational state of the brake.

3. Disc brake according to one of the above claims, **characterised in that** the two points of mass (S1, S2) are at the same radial distance from the centre axis of the brake disc (4).

4. Disc brake according to one of the above claims, **characterised in that** an offset (V) of the second point of mass (S2) relative to the first point of mass (S1) in direction parallel to the brake disc (4) moves at least partially towards an offset of the first brake shoe (3) relative to the second brake shoe (2) parallel to the brake disc (4).

5. Disc brake according to one of the above claims, **characterised in that** an offset (V) of the second point of mass (S2) relative to the first point of mass (S1) goes back in a direction parallel to the brake disc (4) at least partially on different designs relative to one another of the first and the second brake shoe (2, 3).

6. Disc brake according to one of the above claims, **characterised in that** an offset (V) of the second point of mass (S2) relative to the first point of mass (S1) goes back in direction parallel to the brake disc (4) at least partially on mass distributions of the first and the second brake shoe (2, 3).

7. Disc brake according to one of the above claims, **characterised in that** the first and/or the second brake shoe (2, 3) is wedgeshaped in at least one intersecting level.

8. Disc brake according to one of the above claims, **characterised in that** the saddle (1) has an opening (9) in an area which reaches over the brake disc (4).

9. Disc brake according to Claim 8, **characterised in that** the opening (9) extends in the projection parallel to the brake disc over the first and/or the second brake shoe (2, 3).

10. Disc brake according to Claim 8 or 9, **characterised in that** the opening (9) has the contour of a parallelogram.

11. Disc brake according to one of the above claims, **characterised by** a plateshaped support element (6).

12. Disc brake according to Claim 11, **characterised in that** the support element (6) is integrated with an axis part (7).

13. Disc brake according to one of the above claims, **characterised in that** it is a slide-saddle disc brake, a pendulum-saddle disc brake or a fixed-saddle disc brake with single- or doublesided tensioning.

14. Disc brake according to one of the above claims, **characterised in that** it is a brake for commercial vehicles.

## Revendications

1. Frein à disque avec
un disque de frein (4) d'une direction de roulement préférée (D),
un premier segment de frein (2) avec un premier centre de gravité (S1) sur un premier côté du segment de frein (4),
une installation d'application (5) présentant un axe médian, qui est conçue pour pousser le premier segment de frein (2) contre le disque de frein (4), où l'axe médian s'étend perpendiculairement à un plan principal du disque de frein,
un deuxième segment de frein (3) avec un deuxième centre de gravité (S2) sur un deuxième côté du disque de frein (4) et
un étrier (1) pour transférer les forces de freinage produites par le deuxième segment de frein (3) au premier côté du disque de frein (4), où
le deuxième centre de gravité (S2) est décalé par rapport au premier centre de gravité (S1) d'une distance prédéterminée (V) en direction d'un côté sortie de disque de frein correspondant à la direction de rotation préférée (D) du disque de frein (4),
**caractérisé en ce que**
l'axe médian de l'installation d'application (5) passe à travers le premier centre de gravité (S1).

2. Frein à disque selon la revendication 1, **caractérisé en ce que** le décalage du deuxième centre de gravité (S2) par rapport au premier centre de gravité (S1) existe à la fois à l'état de repos et aussi à l'état d'actionnement du frein.

3. Frein à disque selon l'une des revendications précédentes, **caractérisé en ce que** les deux centres de gravité (S1, S2) présentent le même écart radial de l'axe médian du disque de frein (4).

4. Frein à disque selon l'une des revendications précédentes, **caractérisé en ce qu'**un décalage (V) du deuxième centre de gravité (S2) par rapport au premier centre de gravité (S1), dans la direction parallèle au disque de frein (4), rejoint au moins partiellement un décalage du premier segment de frein (3) par rapport au deuxième segment de frein (2) parallèlement au disque de frein (4).

5. Frein à disque selon l'une des revendications précédentes, **caractérisé en ce qu'**un décalage (V) du deuxième centre de gravité (S2) par rapport au premier centre de gravité (S1), dans la direction parallèle au disque de frein (4), provient au moins partiellement de configurations différentes des premier et deuxième segments de frein (2, 3).

6. Frein à disque selon l'une des revendications précédentes, **caractérisé en ce qu'**un décalage (V) du deuxième centre de gravité (S2) par rapport au premier centre de gravité (S1), dans la direction parallèle au disque de frein (4), provient au moins partiellement des répartitions de masse différentes des premier et deuxième segments de frein (2, 3).

7. Frein à disque selon l'une des revendications précédentes, **caractérisé en ce que** le premier et/ou le deuxième segment (s) de frein (2, 3), au moins dans un plan de coupe, est en forme de coin.

8. Frein à disque selon l'une des revendications précédentes, **caractérisé en ce que** l'étrier (1) présente dans une zone passant sur le disque de frein (4) une ouverture (9).

9. Frein à disque selon la revendication 8, **caractérisé en ce que** l'ouverture (9) s'étend dans la projection parallèlement au disque de frein sur le premier et/ou le deuxième segment(s) de frein (2, 3).

10. Frein à disque selon la revendication 8 ou 9, **caractérisé en ce que** l'ouverture (9) présente le contour d'un parallélogramme.

11. Frein à disque selon l'une des revendications précédentes, **caractérisé par** une pièce de support en forme de plaque (6).

12. Frein à disque selon la revendication 11, **caractérisé en ce que** la pièce de support (6) est réalisée en une pièce avec une pièce d'axe (7).

13. Frein à disque selon l'une des revendications précédentes, **caractérisé en ce que** celui-ci est un frein à disque à étrier coulissant, un frein à disque à étrier pivotant ou un frein à disque à étrier fixe à application sur un côté ou sur les deux côtés.

14. Frein à disque selon l'une des revendications précédentes, **caractérisé en ce que** celui-ci est un frein pour des véhicules utilitaires.
